# EUROPÄISCHE PATENTSCHRIFT

(11) **EP 2 945 304 B1**
(45) Veröffentlichungstag und Bekanntmachung des Hinweises auf die Patenterteilung: **30.12.2020**
(21) Anmeldenummer: 14168307.8
(22) Anmeldetag: 14.05.2014
(51) Int. Cl.: H04J 14/02

(54) **Aufbau und Betrieb modularer transparent optischer hierarchischer Netzstrukturen durch AWGs**
Construction and operation of modular optically transparent hierarchical network structures by AWGs
Structure et fonctionnement de structures de réseau hiérarchiques, optiquement transparentes et modulaires au moyen de réseaux de guides d'ondes (AWG)

(43) Veröffentlichungstag der Anmeldung: 18.11.2015
(73) Patentinhaber: Deutsche Telekom AG, 53113 Bonn (DE)
(72) Erfinder: Braun, Ralf-Peter, 12305 Berlin (DE)
(74) Vertreter: Vossius & Partner Patentanwälte Rechtsanwälte mbB

(56) Entgegenhaltungen:
- US-A1- 2004 228 630
- DINGEL B B ET AL: "PHOTONIC ADD-DROP MULTIPLEXING PERSPECTIVE FOR NEXT GENERATION OPTICAL NETWORKS", PROCEEDINGS OF SPIE, S P I E - INTERNATIONAL SOCIETY FOR OPTICAL ENGINEERING, US, Bd. 4532, 1. Januar 2001 (2001-01-01), Seiten 394-408, XP009007872, ISSN: 0277-786X, DOI: 10.1117/12.436032 ISBN: 978-0-89252-037-4

## Beschreibung

### Technisches Gebiet

Die vorliegende Erfindung betrifft einen Aufbau und den Betrieb modularer transparent optischer hierarchischer Netzstrukturen unter Verwendung von AWGs (Arrayed Waveguide Gratings).

### Stand der Technik

In optischen Transportnetzen werden Wellenlängen selektive Switches (WSS; Wellenlängen selektive Schalter) und rekonfigurierbare optische Add/Drop Multiplexer (ROADM) für transparente optische Abzweigungen und Hinzufügungen von optischen Signalen heraus aus und hinein in optisch Wellenlängen-Vielfache bzw. Frequenz -Vielfache (dense wavelength division multiplex (DWDM)) benötigt.

Insbesondere werden bei einem ROADM einem mit Wellenlängenmultiplex betriebenen optischen Übertragungssystem zusätzliche Wellenlängen hinzugefügt (add) oder abgezweigt (drop). Die hinzugefügten und die abgezweigten Wellenlängen werden auf den Zubringer-Glasfasern (Tributaries) zum ROADM geführt.

Aus dem Stand der Technik sind verschiedene AWG, WSS, ROADM Technologien bekannt. So wird in Wikipedia beispielsweise ausgeführt, dass derzeit die meisten WSS Anwendungen feste Kanalbandbreiten von 50 GHz oder 100 GHz mit typisch 9 Ausgangsports nutzen. Für das Multiplexen bzw. Demultiplexen der Wellenlängenkanäle werden z.B. 1xN bzw. Nxl AWGs (Arrayed Waveguide Gratings) und für das Schalten entsprechende Switches basierend auf Mikromechanischen Spiegeln (microeletromechanical mirrors (MEMS)), Binary Liquid Crystal (LC), Liquid Chrystal on Silicon (LCoS) oder MEMS Arrays genutzt (siehe beispielsweise https://en.wikipedia.org/wiki/Wavelength_selective_switching).

Von der Firma JDSU™ sind beispielsweise Twin 1x20 Wavelength Selective Switches (WSS), basierend auf liquid crystal on silicon (LCoS) Technologie bekannt (siehe http://www.jdsu.com/ProductLiterature/trueflexWSS-pb-oc-ae.pdf) oder ROADM 1x9, 100 GHz, mit bis zu 44 Kanälen bekannt, basierend auf einem N-Port Modul als wavelength selective switch (WSS). Dieser ROADM ist aus einem hermetisch abgeschlossenen optischen Block mit elektronischer Steuerung aufgebaut, wobei der optische Block eine Freistrahl Optik Plattform zusammen mit einer Schaltmatrix umfasst, die aus einem array of microelectromechanical mirrors (MEMS) besteht (siehe http://www.jdsu.com/en-us/Optical-Communications/Products/a-z-product-list/Pages/ROADM-100GHz-1x9- WSS.aspx).

Auch weitere Firmen wie PacketLight™, Finisar™, Nistica™, CoAdna™ oder Enablence™ bieten entsprechende Komponenten an.

In optischen Transportnetzen, entsprechend dem ITU-T G.709 Standard "Optical Transport Network (OTN)" (siehe, http://www.itu.int/rec/T-REC-G.709/) werden optische Multiplex Signale mit optischen Frequenzen bzw. Wellenlängen entsprechend dem ITU-T G.694.1 Standard, "DWDM frequency grid" (siehe http://www.itu.int/rec/T-REC-G.694.1/) übertragen.

Dabei können Systeme mit 96 DWDM Kanälen mit 50 GHz pro Kanalbandbreite über mehr als 3000 km übertragen werden (siehe beispielsweise http://www.cisco.com/en/US/prod/ collateral/optical/ps5724/ps2006/data_sheet_c78-713296.html). Das entspricht einer spektralen Effizienz von 2 Bit/s/Hz.

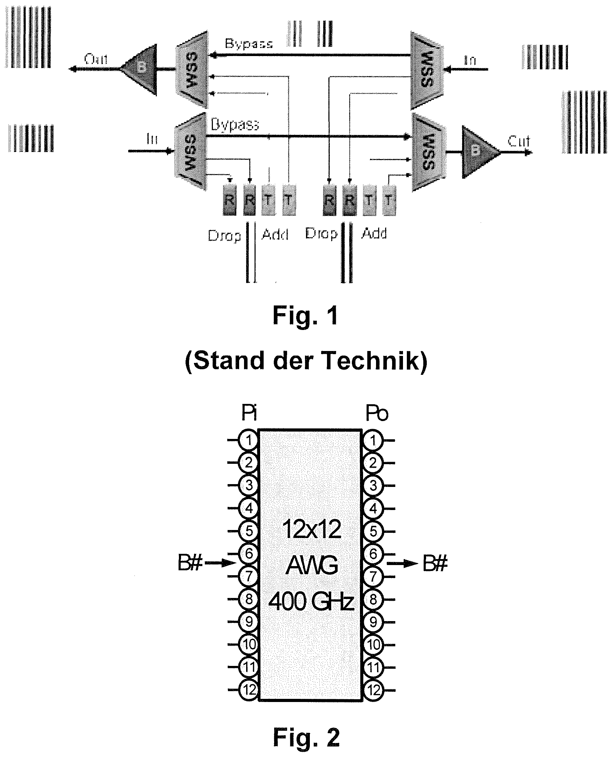

Figur 1 zeigt Beispiele für "reconfigurable optical add drop multiplexer" (ROADM) aus dem Stand der Technik (siehe http://www.packetlight.com/technology/roadm), die durch den immer höher werdenden Bedarf an Übertragungskapazitäten zunehmend in optischen Transportnetzen benötigt werden.

Für jede der beiden Richtungen von Ost nach West (rechts nach links) und West nach Ost (links nach rechts), werden jeweils 1 WSS als 1xN Demultiplexer zum Selektieren der einlaufenden optischen Multiplexsignale beötigt. Zusätzlich werden je ein Nxl Multiplexer zum Zusammenschalten der abgehenden optischen Multiplexsignale benötigt. Dabei kann der Nxl Multiplexer als WSS ausgeführt sein, oder aber er kann auch als einfacher Multiplexer aus z.B. Wellenlängen unabhängigen 3dB Kopplern mit erhöhten Einfügedämpfungen ausgebildet sein. Bei den WSS werden entsprechende Technologien eingesetzt, z.B. optische 1xN De-Multiplexer, Nxl Multiplexer, VOAs (variable optical attenuator) und entsprechende Switches basierend auf Mikromechanischen Spiegeln (microeletromechanical mirrors (MEMS)), Binary Liquid Crystal (LC), Liquid Chrystal on Silicon (LCoS) oder MEMS Arrays. Typisch werden Kanalbreiten von 25 GHz, 50 GHz und 100 GHz unterstützt. Die ausgehenden Multiplexsignale werden mit entsprechenden optischen Verstärkern verstärkt, z.B. für das C-Band durch EDFAs (Erbium doped optical amplifier). Typisch werden im C-Band bis zu 96 Kanäle mit 50 GHz Bandbreite oder 48 Kanäle mit 100 GHz Bandbreite unterstützt.

Ein Trend geht hin zu Flex Grid Frequenzzuordnungen, wobei Kanalbandbreiten in Schritten von 6,25 GHz oder 12,5 GHz Schritten entsprechend dem ITU-T G.694.1 Standard mit größer als 100 GHz Kanalbandbreiten unterstützt werden sollen.

Es besteht somit ein Bedarf neue Verfahren bzw. Systeme für optische Transportnetze bereitzustellen, insbesondere um dem zunehmenden Bedarf an Übertragungskapazitäten gerecht zu werden.

Mit den erfindungsgemäßen Verfahren und Systemen wird dieser Bedarf erfüllt. Die erfindungsgemäßen Verfahren bzw. Systeme sind in den Ansprüchen definiert, wobei bevorzugte Ausführungsformen in den abhängen Ansprüchen definiert sind.

Dingel B.B. et al.: "Photonic add-drop multiplexing perspective for next generation optical networks", Proceedings of SPIE, SPIE-International Society for Optical Engineering, US, Vol. 4532, 2001, discloses an optical network according to the preamble of claim 1. Further related technology is shown in US 2004/228630 A1.

### Zusammenfassung der Erfindung

Die Erfindung ist im unabhängigen Anspruch 1 angegeben. Bevorzugte Weiterbildungen sind in den abhängigen Ansprüchen angegeben.

Gemäß der vorliegenden Erfindung werden NxN AWG (arrayed waveguide grating) Bauteile zum Aufbau von "reconfigurable optical add drop multiplexer" (ROADM) eingesetzt, die erfindungsgemäß verschaltet werden. Die ROADMs gemäß der vorliegenden Erfindung können beispielsweise in Ring, Bus und/oder hierarchischen optischen Netzstrukturen eingesetzt werden, wobei die Anzahl der Add/Drop Ports und/oder die Kanalbandbreite in einem NxN AWG beispielsweise über die nutzbare Bandbreite des C-Bandes verknüpfbar sind. Beispielsweise können die Bandbreiten der Bänder bzw. Kanäle bis zu 1600 GHz für ein 3x3 AWG betragen, wobei diese Bandbreiten bei derzeitigen WSS bzw. ROADM nicht verfügbar sind.

Insbesondere betrifft die vorliegende Erfindung einen rekonfigurierbaren optischen Add/Drop Multiplexer (ROADM), wobei der ROADM mit Hilfe von NxN Arrayed Waveguide Grating, (AWG), optionalen optisch variablen Abschwächern und optischen frequenzunabhängigen Switchen gebildet wird. Insbesondere umfasst der ROADM mindestens ein NxN Arrayed Waveguide Grating, (AWG) für N Bänder, wobei der AWG N Eingangsports Pi und N Ausgangsports Po aufweist. Zudem wird an mindestens einen der N Eingangsports (Pi) und/oder der N Ausgangsports (Po) jeweils ein optischer frequenzunabhängiger Switch angeschlossen, wodurch sich einzelne der N Bänder wahlfrei zuschalten (Add) oder abschalten (Drop) lassen. Vorzugseise ist nur das NxN AWG sowohl für die Add- als auch für die Drop Funktion die Frequenz bestimmende Komponente. Die variablen optischen Abschwächer und/oder die optischen Switches benötigen vorzugsweise keine Frequenzabhängigkeiten und können daher bevorzugt als Frequenz unabhängige Standardelemente ausgeführt sein.

Der optischen Band Switch ist vorzugsweise ein 1x2 optischer frequenzunabhängiger Switch. Zudem können einzelne Bänder auch noch gemultiplext werden, hierzu wird vorzugsweise ein 1xM Demultiplexer und Mx1 Multiplexer mit den optischen Band Switches verbunden, wodurch zusätzliche Kanäle erzeugt bzw. zusammengeführt werden können.

Zusätzliche optionale optische Kanal Switche sind vorzugsweise 1x2 optische Kanal Switche, sodass sich auch die zusätzlichen Kanäle wahlfrei zu- und abschalten lassen.

Zusätzlich können noch variable optische Abschwächern (VOAs), an den 1xM Demultiplexern und/oder Mx1 Multiplexern vorgesehen sein.

Vorzugsweise sind die optischen Switche für die Schaltung der Bänder und der Kanäle die gleichen oder sehr ähnliche Switche. Die Bezeichnung optischer Band Switch bzw. optischer Kanal Switch soll hervorheben, was mit dem Switch geschaltet wird.

Erfindungsgemäß ist es möglich unidirektionale ROADMs bereitzustellen oder bidirektionale ROADMs bereitzustellen. Gemäß einer ersten bevorzugten Ausführungsform wird ein bidirektionaler ROADM durch zwei ROADMs gebildet. Gemäß einer weiteren bevorzugten Ausführungsform kann ein bidirektionaler ROADM auch durch einen der oben genannten ROADMs gebildet werden. Beispielsweise wird von dem AWG einen Port A der N Eingangsports Pi und ein Port A der N Ausgangsports Po für eine Übertragung von West nach Ost zugeordnet. Für eine Übertragung in die entgegensetzte Richtung, d.h, eine Übertragung von Ost nach West wird von dem AWG ein Port B, mit B ≠ A, der N Eingangsports Pi und ein Port B der N Ausgangsports Po zugeordnet.

Mit den erfindungsgemäßen ROADMs können optische Netzwerkstruktur gebildet werden, wobei die ROADMs in einer unidirektionalen linearen Kettenanordnung, in einer bidirektionalen linearen Kettenanordnung, in einer unidirektionalen Ringanordnung oder in einer bidirektionalen Ringanordnung angeordnet sind.

Beispielsweise können mehrere unidirektionale Ringanordnungen verschalteter ROADMs an jeweils einen Port eines übergeordneten NxN AWG transparent optisch über Faserverbindungen angeschaltet werden. Alternativ oder zusätzlich können mehrere bidirektionale lineare Kettenanordnungen verschalteter ROADMs an jeweils einen Port eines übergeordneten NxN AWG transparent optische über Faserverbindungen angeschaltet werden. Auch können mehrere bidirektionale lineare Kettenanordnungen verschalteter ROADMs an jeweils einem Eingangs- und einem Ausgangsport Pärchen eines übergeordneten NxN AWG transparent optisch über Faserverbindungen angeschaltet werden.

### Kurze Beschreibung der Zeichnungen

Im Folgenden werden bekannte Komponenten optischer Netzwerke sowie bevorzugte Ausführungsformen der vorliegenden Erfindung unter Bezugnahme auf die Figuren beschrieben. Es zeigen:
- Fig. 1: einen ROADM (reconfigurable optical add drop multiplexer) aus dem Stand der Technik (siehe http://www.packetlight.com/technology/roadm);
- Fig. 2: ein NxN AWG mit N = 12 Ports und einer Kanalbandbreite von 400 GHz;
- Fig. 3: eine passive optische Frequenz bzw. Wellenlängen adressierte Verschaltung der 400 GHz Kanalbänder mit den Kanalnummern B# von den Eingangsports Pi auf die Ausgangsports Po des AWGs aus Fig. 2;
- Fig. 4: ein Beispiel einer Anordnung für das Prinzip und der Verschaltung eines 96x96 AWGs;
- Fig. 5: ein Prinzip und eine Verschaltung eines erfindungsgemäßen ROADM für eine Richtung unter Nutzung eines 12x12 AWG mit 400 GHz Bandbreite der AWG Bänder;
- Fig. 6: die Nutzung von 2 NxN AWGs mit N=12 für die Herstellung eines bidirektionalen erfindungsgemäßen ROADM;
- Fig. 7: ein Prinzip und eine Verschaltung eines bidirektionalen ROADM unter Nutzung eines 12x12 AWG;
- Fig. 8: eine Verschaltung von ROADMs in einer unidirektionalen linearen Kettenanordnung;
- Fig. 9: eine Verschaltung von ROADMs in einer bidirektionalen linearen Kettenanordnung;
- Fig. 10: eine Verschaltung von ROADMs in einer unidirektionalen Ringanordnung;
- Fig. 11: eine Verschaltung von ROADMs in einer bidirektionalen Ringanordnung;
- Fig. 12: eine Transparente optische Verschaltung von mehreren in unidirektionalen Ringanordnungen verschalteter ROADMs mit einem Port eines übergeordneten 12 x 12 AWG mit 400 GHz Bandbreite;
- Fig. 13: eine Transparente optische Verschaltung von mehreren in bidirektionalen linearen Kettenanordnungen verschalteter ROADMs mit einem Port eines übergeordneten 12 x 12 AWG mit 400 GHz Bandbreite; und
- Fig. 14: eine Transparente optische Verschaltung von mehreren in bidirektionalen linearen Kettenanordnungen verschalteter ROADMs mit jeweils zwei Ports eines übergeordneten 12 x 12 AWG mit 400 GHz Bandbreite.

### Detaillierte Beschreibung der Zeichnungen

Figur 2 zeigt ein NxN AWG mit z.B. N = 12 Ports und einer Kanalbandbreite von 400 GHz. Auf jedem Port kann das gesamte C-Band mit 12 x 400 GHz = 4 800 GHz geführt werden. B# bezeichnet die Bandnummern der optischen 400 GHz Bänder mit den B# = 1, 2, ..., 12; Pi bezeichnet die Glasfaser Eingangsports und Po bezeichnet die Glasfaser Ausgangsports. Erfindungsgemäß kann beispielsweise ein solches AWG Bauteil zum Aufbau eines erfindungsgemäßen ROADM eingesetzt werden.

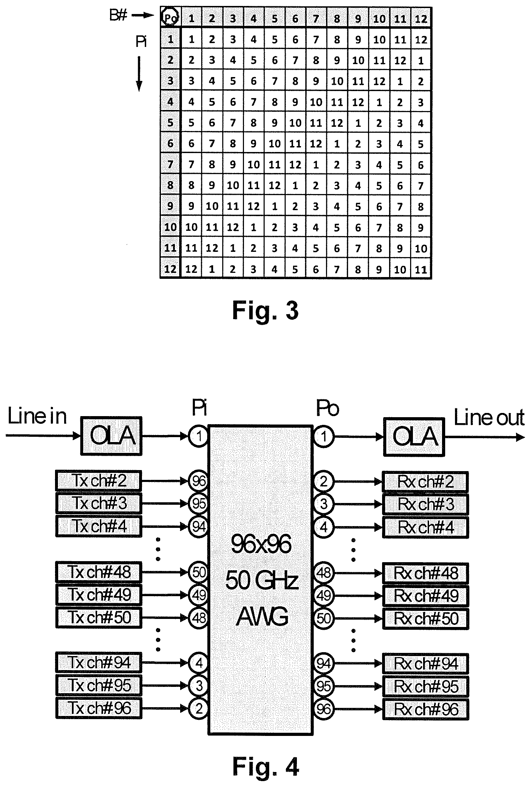

Figur 3 zeigt eine Zuordnungstabelle einer bevorzugten erfindungsgemäßen Verschaltung. Insbesondere ist in Fig. 3 eine passive optische Frequenz bzw. Wellenlängen adressierte Verschaltung der 400 GHz Kanalbänder mit den Kanalnummern B# von den Eingangsports Pi auf die Ausgangsports Po des AWGs dargestellt.

Entsprechende Gleichungen für die Berechnung der gegenseitig abhängigen Größen Po, Pi und B# sind unten unter [1] angegeben. Beispielsweise wird das 400 GHz Band B# = 2 am Eingangsport Pi = 2 auf das Ausgangsport Po = 3 geleitet. Der entsprechende Gegenkanal vom Eingangsport Pi = 3 zum Ausgangsport Po = 2 wird durch das 400 GHz Band B# = 12 bereitgestellt. $\begin{matrix}Po = Mod \left\{\frac{\left(Pi-1\right) + \left(B#-1\right)}{12}\right\} + 1 \\ Pi = Mod \left\{\frac{Po - B #}{12}\right\} + 1 \\ B # = Mod \left\{\frac{Po - Pi}{12}\right\} + 1\end{matrix}$ [1]

Mit anderen Worten, mit Hilfe dieser Gleichungen können die abhängigen Größen Po (Nummer des Ausgangsport), Pi (Nummer des Eingangsports) und B# (Nummer des 400 GHz Bandes, B# = 1, 2, ..., 12) eines 12x12 Port AWG, vorzugsweise mit 400 GHz Kanalbandbreite erfindungsgemäß berechnet werden.

Werden beispielsweise die 400 GHz Bänder durch z.B. weitere 1x8 Demultiplexer bzw. 8x1 Multiplexer mit 50 GHz Kanalbandbreiten mit entsprechenden Kanalnummern ch#, ch# = 1, 2, ..., 96 weiter untergeteilt, dann berechnen sich die 400 GHz Bandnummern B# und die 50 GHz Subkanalnummern Subch# nach den folgenden Gleichungen unter [2]. Beispielsweise wird der 50 GHz Kanal ch# = 13 im 400 GHz Band B# = 2 sowie im 50 GHz Subkanal Subch# = 5 geführt. $\begin{matrix}B # = Roundup \left(\frac{ch #}{8}, 0\right) \\ Subch # = Mod \left\{\frac{ch # - 1}{8}\right\} + 1\end{matrix}$ [2]

Mit anderen Worten, die Gleichungen unter [2] dienen beispielhaft zur Berechnung der Übertragungskanalnummern der 400 GHz Bänder B# (B# = 1, 2, ..., 12) und der 50 GHz Subkanalnummern Subch# (Subch# = 1, 2, ..., 8) aus den 50 GHz Kanalnummern (ch# = 1, 2, ..., 96).

Die richtungsbezogene Zuordnung aller 400 GHz Bandnummern B#1 (links, von Ost nach West) und B#r (rechts, von West nach Ost) für entsprechende Gegenkanäle zwischen 2 beliebigen Ports Pi und Po ist in der folgenden Tabelle 1 dargestellt.

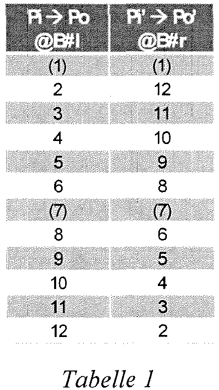

Tabelle 1 ist eine Darstellung der richtungsbezogenen Zuordnung aller 400 GHz Bandnummern B#1 (links, von Ost nach West) für die Ports Pi nach Po und B#r (rechts, von West nach Ost) und für die entsprechenden Gegenkanäle mit den Gegenports Pi' = Po und Po' = Pi zwischen zwei beliebigen Ports Pi und Po.

Beispielsweise wird für die Übertragung von Port Pi = 2 nach Port Po = 3 in Richtung links, von Ost nach West durch das 400 GHz Band B#1 = 2 bereitgestellt, entsprechend Figur 3 und Gleichungen [1]. Die Übertragung in der Gegenrichtung bzgl. der Gegenports Pi' = Po = 3 nach Po' = Pi = 2 in Richtung rechts, von West nach Ost wird durch das 400 GHz Band B#r = 12 bereitgestellt, entsprechend Figur 3 und Gleichungen [1].

Die Berechnung der Bandnummern B# aus den Pi und Po Ports, sowie die gegenseitige Berechnung der richtungsbezogenen Zuordnung aller 400 GHz Bandnummern B#1 (links, von Ost nach West) für die Ports Pi nach Po und B#r (rechts, von West nach Ost) und für die entsprechenden Gegenkanäle mit den Gegenports Pi' = Po und Po' = Pi zwischen zwei beliebigen Ports Pi und Po sind in Gleichungen 2 dargestellt. $\begin{matrix}B # = Mod \left\{\frac{Po - Pi}{12}\right\} + 1 \\ B # r = Mod \left\{\frac{13 - B #}{12}\right\} + 1 \\ B # l = Mod \left\{\frac{13 - B # r}{12}\right\} + 1 \\ B # r = Mod \left\{\frac{13 - B # l}{12}\right\} + 1\end{matrix}$ [3]

Insbesondere dienen die Gleichungen [3] zur Berechnung der Bandnummern B# aus den Pi und Po Ports, sowie die gegenseitige Berechnung der richtungsbezogenen Zuordnung aller 400 GHz Bandnummern B#1 (links, von Ost nach West) für die Ports Pi nach Po und B#r (rechts, von West nach Ost) für entsprechende Gegenkanäle mit den Gegenports Pi' = Po und Po' = Pi zwischen 2 beliebigen Ports Pi und Po.

Wird die Bandbreite des optischen C-Bandes mit 4,8 THz angenommen, dann ist die Anzahl der NxN AWG Ports und die Bandbreite der AWG Bänder über die Darstellung in Tabelle 2 verknüpft.

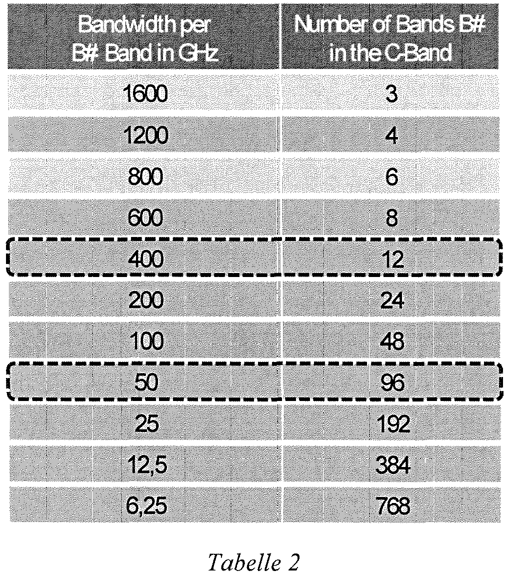

Tabelle 2 illustriert den Zusammenhang zwischen der Portanzahl N eines NxN AWGs und der Bandbreite der AWG Bänder für eine zugeordnete optische C-Band Bandbreite von 4,8 THz. Beispielsweise ergibt sich für N = 3 die Bandbreite der AWG Bänder zu 4,8 THz / 3 = 1600 GHz. Für N = 12 ergibt sich die Bandbreite der AWG Bänder zu 4,8 THz / 12 = 400 GHz. Für N = 96 ergibt sich die Bandbreite der AWG Bänder zu 4,8 THz / 96 = 50 GHz.

Die Anzahl N der AWG Ports kann beliebig gewählt werden, wobei die Werte in Tabelle 2 bevorzugt so gewählt wurden, dass die Bandbreiten den ITU-T G.694.1 Standard "DWDM frequency grid" bzw. Vielfache von 50 GHz entsprechen.

NxN AWGs mit Portzahlen von N = 12 und 400 GHz sind kommerziell verfügbar und entsprechen dem Stand der Technik. Auch größere Portzahlen N > 12 sind bereits kommerziell verfügbar.

Gemäß einer ersten bevorzugten Ausführungsform der vorliegenden Erfindung werden die bisher diskutierten NxN AWG (arrayed waveguide grating) Elemente zum vereinfachten Aufbau von DWDM Multiplexer/Demultiplexer in DWDM Terminals eingesetzt, wobei die NxN AWGs in einer entsprechend der Erfindung bestimmten Art und Weise verschaltet werden. Als Beispiel für ein 96 Kanal DWDM Terminal mit 50 GHz Kanalbandbreiten ist in Fig. 4 die Verschaltung eines 96x96 AWGs dargestellt. Die gesamten passiven optischen Multiplex und Demultiplex Funktionen werden dabei durch nur ein 96x96 AWG mit 50 GHz Bandreite bereitgestellt. Dadurch entfallen aufwendige Abstimmungs- und Regel-Kreise für das Fine Tuning von weiteren frequenzabhängigen Komponenten. Für das AWG kann vorzugsweise eine Temperaturregelung vorgesehen werden, um vorzugsweise einzelne oder alle 50 GHz Kanäle in der optischen Frequenzebene zu abzustimmen bzw. zu stabilisieren.

Die Verschaltung des AWG ist vorzugsweise so gewählt, dass das Signal des Transmitters auf dem DWDM Kanal ch#2 über Port 96 auf den Line Out Port 1 geleitet wird. Entsprechend werden die anderen DWDM Kanäle z.B. ch#3, ch#4, ..., ch#95, und ch#96 an den entsprechenden Ports 95, 94, ..., 3, und 2 ebenfalls auf den Line Out Port 1 geleitet. Dann werden die Kanäle vorzugsweise noch durch einen optischen Line Amplifier (OLA) verstärkt und auf die Strecke gegeben.

Die erfindungsgemäße Anordnung hat den bevorzugten Vorteil, dass die optischen Signale vorzugsweise nur eine frequenzselektive Komponente durchlaufen, wodurch weitere optische Dämpfungen und Abstimmungen mit zusätzlichen Komponenten vermieden werden.

In der nachfolgenden Tabelle 3 ist als erstes Beispiel für das Prinzip und Verschaltung die Anordnung eines 96x96 AWGs für die Nutzung als bidirektionales 96 Kanal DWDM Terminal mit 50 GHz Kanalbandreiten für sowohl die Multiplex als auch die Demultiplex frequenzselektive Funktionalität dargestellt.

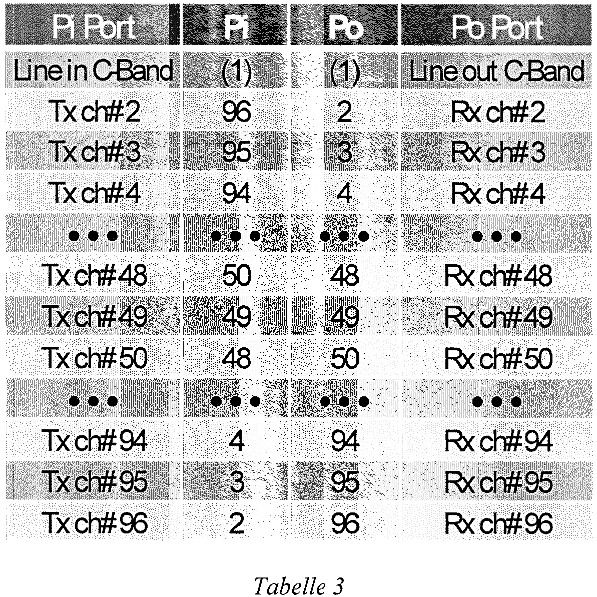

Insbesondere zeigt die Tabelle 3 eine bevorzugte Anschaltung der Transmitter TX bzw. Receiver Rx mit entsprechenden 50 GHz optischen Kanälen ch# an die Eingangsports Pi bzw. Ausgangsports Po eines 96x96 Port 50 GHz AWG, um die optische Multiplexer/Demultiplexer Funktionalität für ein bidirektionales 96 Kanal DWDM Terminal mit 50 GHz Kanalbandreiten bereitzustellen.

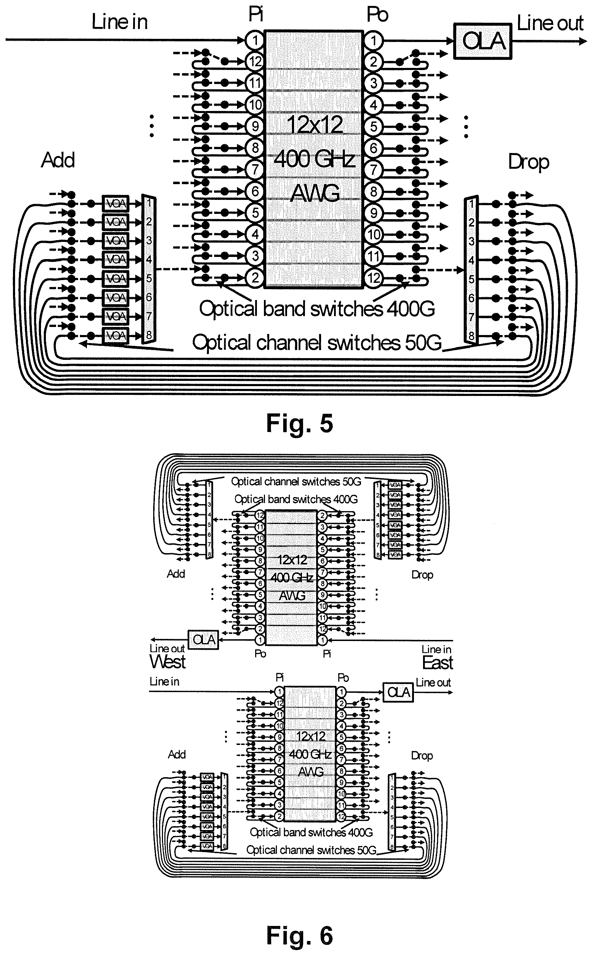

Nachfolgend wird anhand eines 12x12 AWG Beispiels die Verschaltung in Tabelle 4 für eine Richtung für ein ROADM dargestellt. In Fig. 5 ist die entsprechende bevorzugte Zuordnung der Add/Drop Bänder B# zu den Add/Drop Ports dargestellt. Insbesondere zeigt die Fig. 5 ein beispielhaftes Prinzip und eine Verschaltung eines ROADM für eine Richtung unter Nutzung eines 12x12 AWG mit 400 GHz Bandbreite der AWG Bänder. Die Line in und Line out Ports 1 können das gesamte C-Band tragen. Die Verschaltung der Ausgangsports Po mit den Eingangsports Pi erfolgt vorzugsweise nach Tabelle. 4. Mit Hilfe optischer Band Switche (optischer Band Schalter) lassen sich 400 GHz AWG Bänder wahlfrei schalten. So lassen sich beispielsweise mit Hilfe von zusätzlichen 1x8 bzw. 8x1 50 GHz Demultiplexer bzw. Multiplexer und der optischen Kanal/Band Switches 11 x 8 = 88 optische 50 GHz Kanäle wahlfrei schalten. Die Begriffe Switch und Schalter werden in der vorliegenden Erfindung synonym verwendet.

In einer zweiten bevorzugten Ausführungsform der vorliegenden Erfindung werden die bisher diskutierten NxN AWG (arrayed waveguide grating) Elemente zum vereinfachten Aufbau von WSS und "reconfigurable optical add drop multiplexer" (ROADM) eingesetzt, wobei die NxN AWGs in einer entsprechend der Erfindung bestimmten Art und Weise verschaltet werden. Als Beispiel für ein ROADM mit 12 x 400 GHz Bändern bzw. 96 x 50 GHz Kanälen ist in Fig. 6 die Verschaltung eines 12x12 AWGs mit 400 GHz AWG Bändern dargestellt. Zusätzlich sind vorzugsweise weitere Komponenten verschaltet, z.B. 8x1 50GHz Multiplexer, und 1x8 50 GHz Demultiplexer, optische 1x2 Switches zur Schaltung der 50 GHz und 400 GHz Signale (vorzugsweise alles dieselben breitbandigen Switche ohne Frequenzselektion) und variable optische Abschwächer (variabel optical attenuator VOA) (vorzugsweise alles dieselben breitbandigen VOA ohne Frequenzselektion).

Die Line in und Line out Ports 1 können beispielsweise das gesamte C-Band tragen, wobei eine Unterteilung in z.B. 12 x 400 GHz Bänder, 96 x 50 GHz Kanäle oder auch ein sinnvoller Mix für entsprechende Anwendungen zwischen beiden Unterteilungen möglich ist. Die bevorzugte Verschaltung der Ausgangsports Po mit den Eingangsports Pi für die verschiedenen 400 GHz AWG Bänder sowie die Port Funktionalitäten sind in Tabelle 4 dargestellt.

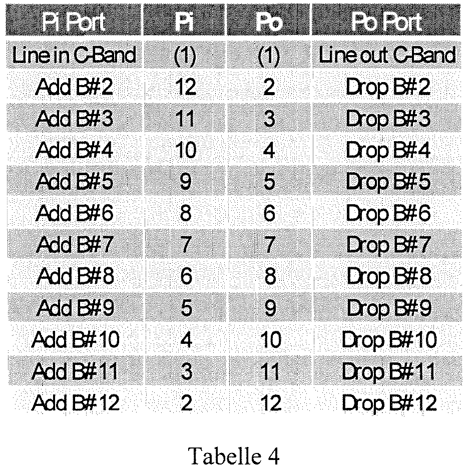

Mit Hilfe der optischen 1x2 Band Switche lassen sich die 400 GHz AWG Bänder wahlfrei schalten. Mit Hilfe der 8x1 bzw. 1x8 50 GHz Multiplexer bzw. Demultiplexer sowie der optischen 1x2 Kanal Switches lassen sich 11 x 8 = 88 optische 50 GHz Kanäle wahlfrei schalten. Die Add, die Drop sowie die Weiterschaltung vom Line in zum Line out Port 1 ist für alle 50 GHz Kanäle, für alle 400 GHz Bänder oder einen sinnvollen Mix möglich.

Zur Veranschaulichung wurden hier beispielhaft überwiegend 400 GHz AWG und 50 GHz Kanal Bandbreiten in den Beispielen genutzt, wobei generell auch andere Band bzw. Kanal Bandbreiten möglich sind.

Gemäß einer dritten bevorzugten Ausführungsform der vorliegenden Erfindung werden die bisher diskutierten NxN AWG (arrayed waveguide grating) Elemente zum vereinfachten Aufbau von WSS und "reconfigurable optical add drop multiplexer" (ROADM) eingesetzt, wobei zwei NxN AWGs nach Fig. 6 zur Herstellung eines bidirektionalen ROADM genutzt werden.

In Fig. 6 ist beispielsweise ein bidirektionales ROADMs zur wahlfreien Schaltung von 12 x 400 GHz Bändern oder 96 x 50 GHz Kanälen oder einer sinnvollen Aufteilung der 50 GHz Kanäle und 400 GHz Bänder dargestellt. Insbesondere zeigt die Fig. 6 die Nutzung von 2 NxN AWGs in der Anwendung nach Tabelle 4 für die Herstellung eines bidirektionalen ROADMs zur wahlfreien Schaltung von 12 x 400 GHz Bändern oder 96 x 50 GHz Kanälen oder einer sinnvollen Aufteilung der 50 GHz Kanäle und 400 GHz Bänder.

Gemäß einer vierten bevorzugten Ausführungsform der vorliegenden Erfindung werden die bisher diskutierten NxN AWG (arrayed waveguide grating) Elemente zum vereinfachten Aufbau von WSS und "reconfigurable optical add drop multiplexer" (ROADM) eingesetzt, wobei vorzugsweise nur ein, auf bestimmte Art und Weise verschaltetes NxN AWG genutzt wird.

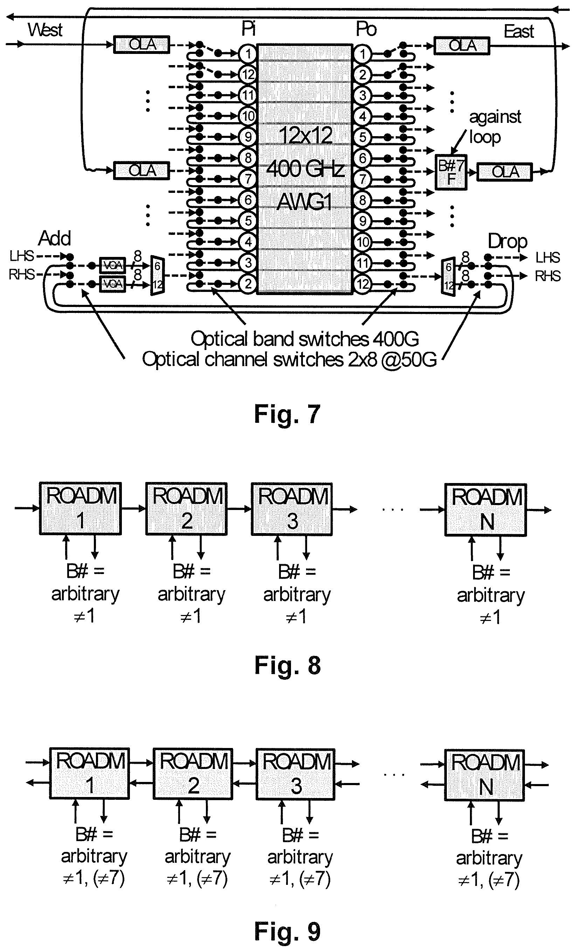

Als Beispiel für ein bidirektionales ROADM mit 12 x 400 GHz Bändern bzw. 96 x 50 GHz Kanälen ist in Fig. 7 die Verschaltung eines 12x12 AWGs mit 400 GHz AWG Bändern dargestellt. Zusätzlich sind weitere Komponenten verschaltet, z.B. 2 Band 8x1 50GHz Multiplexer (für 2 bestimmte AWG 400 GHz Bänder), und 2 Band 1x8 50 GHz Demultiplexer (für 2 bestimmte AWG 400 GHz Bänder), optische 1x2 Switches zur Schaltung der 50 GHz und 400 GHz Signale (alles dieselben breitbandigen Switche ohne Frequenzselektion) und variable optische Abschwächer (variabel optical attenuator VOA) (alles dieselben breitbandigen VOA ohne Frequenzselektion).

Die Line in und Line out Ports 1 sind für die Übertragung von West nach Ost (RHS: right hand side) zugeordnet und können das gesamte C-Band tragen (12 x 400 GHz Bänder). Die Line in und Line out Ports 7 sind für die Übertragung von Ost nach West (LHS: left hand side) zugeordnet und können auch das gesamte C-Band tragen (12 x 400 GHz Bänder). Die AWG 400 GHz Bänder B#1 und B#7 sind dabei nicht für die allgemeine Add/Drop Funktionalität verfügbar. Außerdem entsteht für das 400 GHz Band B#7 ein Loop bei der Zusammenschaltung von bidirektionalen ROADMs nach Fig. 7, so dass ein Bandfilter zur Unterdrückung des 400 GHz Bandes B#7 am Line out Ausgang West sinnvoll ist.

Insbesondere zeigt Fig. 7 Prinzip und Verschaltung eines bidirektionalen ROADM unter Nutzung eines 12x12 AWG mit 400 GHz Bandbreite der AWG Bänder. Die Line in und Line out Ports 1 sind für die Übertragung von West nach Ost (RHS: right hand side) zugeordnet und können das gesamte C-Band tragen (12 x 400 GHz Bänder); die Line in und Line out Ports 7 sind für die Übertragung von Ost nach West (LHS: left hand side) zugeordnet und können auch das gesamte C-Band tragen (12 x 400 GHz Bänder). Die Verschaltung der Ausgangsports Po mit den Eingangsports Pi erfolgt vorzugsweise nach Tabelle 5. Mit Hilfe der optischen Band Switche lassen sich 400 GHz AWG Bänder wahlfrei schalten, mit Hilfe der 2 Band 1x8 bzw. 2 Band 8x1 50 GHz Demultiplexer bzw. Multiplexer und der optischen Kanal Switches lassen sich 10 x 8 = 80 optische 50 GHz Kanäle wahlfrei schalten

Eine Unterteilung ist in z.B. 12 x 400 GHz Bänder, 96 x 50 GHz Kanäle oder auch ein sinnvoller Mix zwischen beiden Unterteilungen möglich. Die Verschaltung der Ausgangsports Po mit den Eingangsports Pi für die verschiedenen 400 GHz AWG Bänder sowie die Port Funktionalitäten sind Tabelle 5 dargestellt.

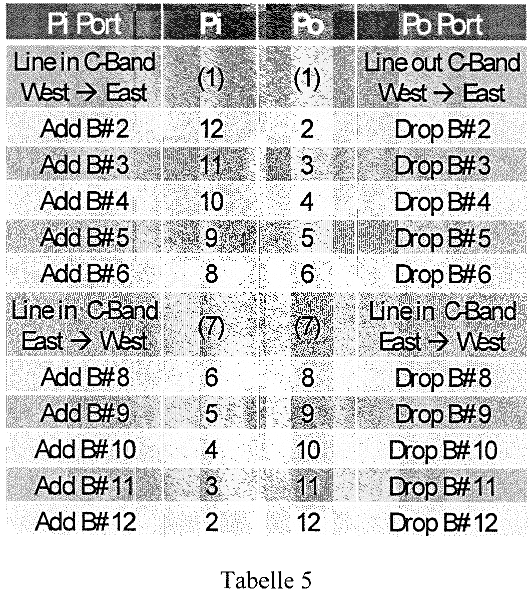

Insbesondere zeigt Tabelle 5 die Verschaltung der Ausgangsports Po mit den Eingangsports Pi nur eines 12x12 AWG mit 400 GHz Bandbreite der AWG Bänder, um die ROADM Funktionalität für eine bidirektionale Übertragung herzustellen
Mit Hilfe der optischen 1x2 Band Switche lassen sich die 400 GHz AWG Bänder wahlfrei schalten. Mit Hilfe der 2 Band 8x1 bzw. 2 Band 1x8 50 GHz Multiplexer bzw. Demultiplexer sowie der optischen 1x2 Kanal Switches lassen sich 10 x 8 = 80 bidirektionale optische 50 GHz Kanäle wahlfrei schalten. Die Add, die Drop sowie die Weiterschaltungen von den Line in Ports Pi = 1 bzw. Pi =7 zu den entsprechenden Line out Port Po = 1 bzw. Po = 7 für die Richtungen West -→ Ost bzw. Ost -→ West ist für alle 50 GHz Kanäle, für alle 400 GHz Bänder oder einen sinnvollen Mix möglich.

Eine bevorzugte feste Verschaltung der ROADMs nach den Figuren 5, 6 und 7 ist auch möglich, indem z.B. die optischen Schalter durch eine vorgegebene Faser optische Verschaltung ersetzt werden. Soll z.B. nur ein festes 400 GHz Band z.B. B#3 geadded/gedroped werden, dann werden der Drop Port Po3 und der Add Port Pi11 herausgezogen und alle anderen Verbindungen entsprechend Tabelle 5 durchgeführt. Dadurch ergeben sich sehr einfache und kostengünstige feste OADMs, die aber durch manuelle Umkonfigurierungen der Ports trotzdem quasi flexibel bleiben.

Die erfindungsseitig genannten Strukturen (z.B. Tabelle 4, Fig. 6 und Fig. 7) sind für die Integration mit wohlbekannten Technologien (Glas, Si, etc.) geeignet und können damit kostengünstig hergestellt werden.

Gemäß einer fünften erfindungsgemäßen Ausführungsform können ROADMs nach Fig. 5 in einer unidirektionalen linearen Kettenanordnung, wie in Fig. 8 dargestellt, verbunden werden. Insgesamt können pro ROADM 11 x 400 GHz Bänder bzw. 11 x 8 = 88 x 50 GHz unidirektionale Kanäle genutzt werden (das Band B#1 ist nicht nutzbar).

Gemäß einer sechsten erfindungsgemäßen Ausführungsform können bidirektionale ROADMs nach den Figuren 6 und 7 in einer bidirektionalen linearen Kettenanordnung, wie in Fig. 9 dargestellt, verbunden werden. Der Unterschied zwischen den ROADMs nach Fig. 6 und 7 liegt darin, dass ein ROADM nach Fig. 6 zwei NxN AWGs nutzt und insgesamt 11 x 400 GHz Bänder bzw. 11 x 8 = 88 x 50 GHz Kanäle pro ROADM genutzt werden können (das Band B#1 ist nicht nutzbar), während ein ROADM nach Fig. 7 nur ein NxN AWGs nutzt und insgesamt 10 x 400 GHz Bänder bzw. 10 x 8 = 80 x 50 GHz Kanäle pro ROADM genutzt werden können (die Bänder B#1 und B#7 sind nicht nutzbar).

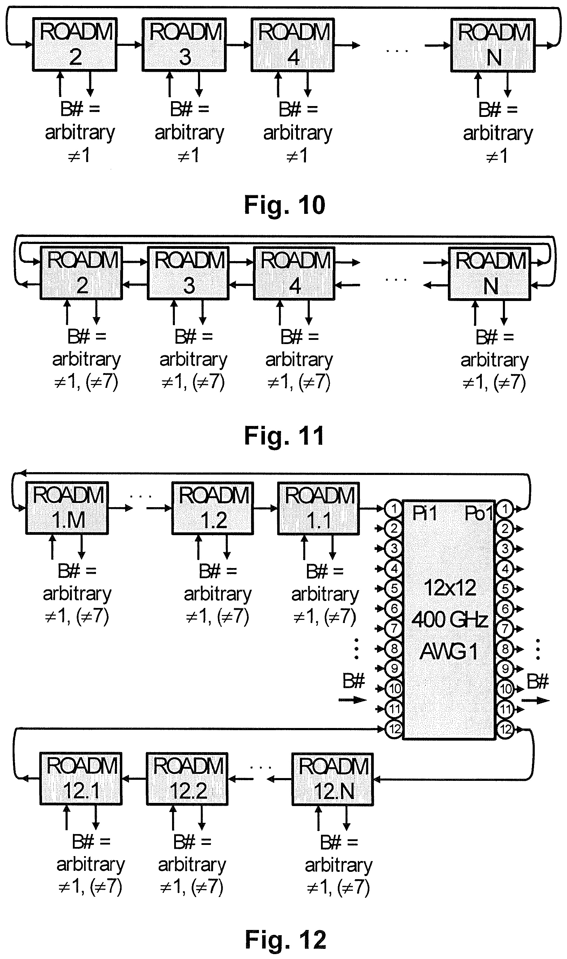

In einer siebenten Ausprägung können ROADMs nach Fig. 5 in einer unidirektionalen Ringanordnung, wie Fig. 10 dargestellt, verbunden werden. Insgesamt können pro ROADM 11 x 400 GHz Bänder bzw. 11 x 8 = 88 x 50 GHz unidirektionale Kanäle genutzt werden (das Band B#1 ist nicht nutzbar).

In einer achten erfindungsgemäßen Ausführungsform können bidirektionale ROADMs nach den Figuren 6 und 7 in einer bidirektionalen Ringanordnung, wie in Fig. 11 dargestellt, verbunden werden. Der Unterschied zwischen den ROADMs nach Figuren 6 und 7 liegt darin, dass ein ROADM nach Fig. 6 zwei NxN AWGs nutzt und insgesamt 11 x 400 GHz Bänder bzw. 11 x 8 = 88 x 50 GHz Kanäle pro ROADM genutzt werden können (das Band B#1 ist nicht nutzbar), während ein ROADM nach Fig. 7 nur ein NxN AWGs nutzt und insgesamt 10 x 400 GHz Bänder bzw. 10 x 8 = 80 x 50 GHz Kanäle pro ROADM genutzt werden können (die Bänder B#1 und B#7 sind nicht nutzbar).

In der linearen Kettenanordnung und in Ringstrukturen von ROADMs mit der Auskopplung beliebiger Wellenlängenbändern bzw. Kanälen können die Wellenlängen der ausgekoppelten Bänder bzw. Kanäle für weitere Übertragungen wiederverwendet werden. Um zwischen den verschiedenen Knoten mit ihren ROADMs eine Vollvermaschung zu erreichen, berechnet sich die Anzahl der benötigten Wellenlängen nach der Formel [4]. $# λ = \left\{\begin{matrix}\frac{{N}^{2}}{4} & equal \\ \frac{{N}^{2} - 1}{4} & unequal\end{matrix}\right\}$ [4]

Formel [4] dient zur Berechnung der Anzahl der Wellenlängen #λ, die für eine Vollvermaschung in linear verketteten bzw. Ringstrukturen notwendig sind.

Die Tabelle 6 zeigt die Anzahl der Wellenlängen #λ, entsprechend der Gleichung [4], die für eine Vollvermaschung in linear verketteten bzw. Ringstrukturen mit N Knoten (ROADMs) notwendig sind

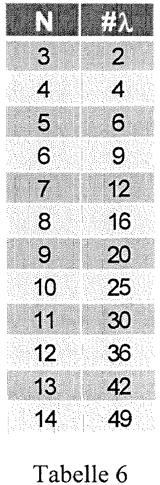

In einer neunten erfindungsgemäßen Ausführungsform können, wie in Fig. 12 dargestellt, mehrere unidirektionale Ringanordnungen verschalteter ROADMs (entsprechend Fig. 10) an jeweils ein Eingangs-Ausgangs Portpärchen eines übergeordneten z.B. 12x12 AWG mit 400 GHz Bandbreite der Bänder transparent optisch über Faserverbindungen angeschaltet werden. Durch diese Verschaltung entsteht ein Loop für Band B#1, der entsprechend wie für Band B#7 in Fig. 7 durch ein optisches Bandfilter für das Band B#1 unterdrückt werden kann. Das übergeordnete AWG dient dabei als Transitebene über die die angeschalteten ROADM Domänen transparent verkoppelt werden können.

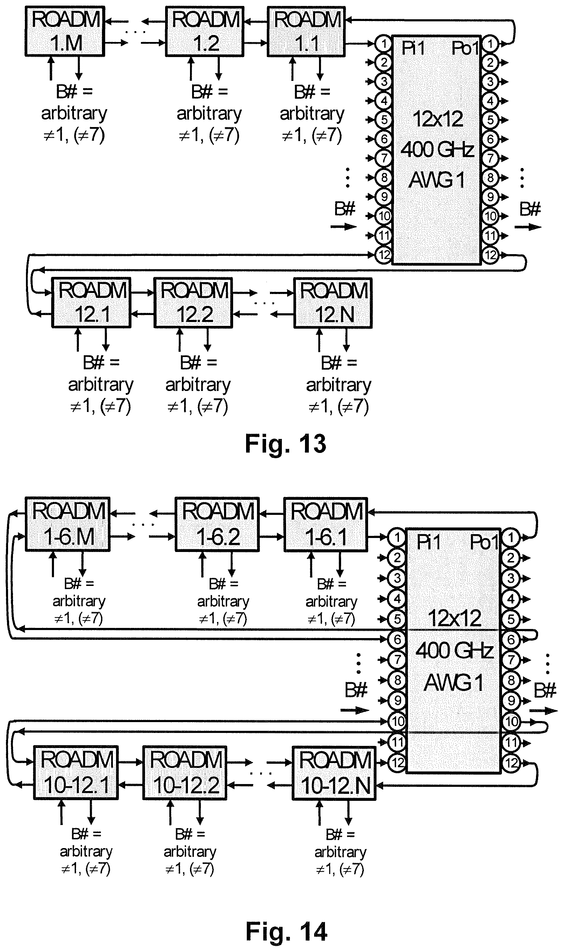

In einer zehnten erfindungsgemäßen Ausführungsform können, wie in Fig. 13 dargestellt, mehrere bidirektionale lineare Kettenanordnungen verschalteter ROADMs (entsprechend Fig. 11) an jeweils ein Eingangs-Ausgangs Portpärchen eines übergeordneten z.B. 12x12 AWG mit 400 GHz Bandbreite der AWG Bänder transparent optische über Faserverbindungen angeschaltet werden. Das übergeordnete AWG dient dabei als Transitebene über die die angeschalteten ROADM Domänen transparent verkoppelt werden können.

In einer elften erfindungsgemäßen Ausführungsform können, wie in Fig. 14 dargestellt, mehrere bidirektionale lineare Kettenanordnungen verschalteter ROADMs (entsprechend Fig. 9) an jeweils zwei Eingangs-Ausgangs Portpärchen eines übergeordneten z.B. 12x12 AWG mit 400 GHz Bandbreite der AWG Bänder transparent optisch über Faserverbindungen angeschaltet werden. Durch diese Verschaltung entstehen Loops für Band B#1 und Band B#7, die entsprechend wie für Band B#7 in Fig. 7 durch optische Bandfilter für die Bänder B#1 und B#7 unterdrückt werden können.

Das übergeordnete AWG dient auch hier vorzugsweise als Transitebene über die die angeschalteten ROADM Domänen transparent verkoppelt werden können.

Insbesondere sind in dieser Anordnung mehrere unabhängige Wege zwischen verschiedenen Knoten möglich, so dass hier Arbeits- und Ersatzwege für sichere Netze geschaltet werden können. Z.B. wird ein Signal, das in ROADM 1-6.1 auf Band B#10 nach Osten eingekoppelt wird über AWG 1 Input Port Pil nach AWG 1 Ausgang Port Po10 und dann nach ROADM 10-12.1 geleitet. Dort kann das Band B#10 am Drop Ausgang empfangen werden. Für den unabhängigen Ersatzweg würde dasselbe Signal in das ROADM 1-6.1 auf Band B#5 nach Westen eingekoppelt werden, das über AWG 1 Input Port Pi6 nach AWG 1 Ausgang Port Po10 und dann nach ROADM 10-12.1 geleitet wird. Dort Kann das Band B#5 am Drop Ausgang ebenfalls empfangen werden.

Die Bänderzuordnungen B# für Hin- und Rückkanäle zwischen zwei beliebigen ROADMs, auch zwischen verschiedenen Domänen über das hierarchisch verschaltete Transit AWG 1 hinweg, verhalten sich bei den optisch transparenten Verschaltungen für die Anordnungen entsprechend der Figuren 12, 13, 14 nach den Tabellen 3, 4 und 5, je nach verwendetem NxN AWG und seiner Verschaltung (unidirektionale, bidirektional, lineare Verkettung, Ringanordnung). Beispielsweise ist der Rückkanal für die in Fig. 14 dargestellte Struktur und des oben genannten Signals auf B#10 in ROADM 1-6.1 über AWG 1 Pil nach AWG 1 Po10 (siehe Fig. 3) nach ROADM 10-12.1) entsprechend Tabelle 4 über Band B#4 geführt. Der entsprechende Weg für B#4 geht in ROADM 10-12.1 nach AWG 1 Pi10 nach AWG 1 Po1 (siehe Fig. 3) nach ROADM 1-6.1 und kann dort am Drop Port empfangen werden. Dabei werden der Hin- und Rückkanal immer über denselben Weg durch das Netz (Fig. 14) geführt.

Eine gemischte Verschaltung der verschiedenen Strukturen entsprechend der Figuren 12, 13 und 14 sind ebenfalls möglich, wobei die Logik für die Verschaltung der Hin- und Rückkanäle ebenfalls erhalten bleibt.

Durch diese Anordnung sind Vollvermaschungen in zwei Ebenen möglich.

In der ersten Transitebene des AWG 1 können die verschiedenen ROADM Domänen (verkettete oder Ringanordnungen der ROADMs) vollvermascht werden. Dazu werden N Wellenlängen bei Verwendung eines NxN AWG 1 benötigt, siehe Fig. 3. Für N = 12 ergeben sich 12 Wellenlängen z.B. für 50 GHz DWDM Kanäle von denen insgesamt 96 x 50 GHz DWDM Kanälen im C-Band vorhanden sind (siehe Tabelle 2). Nach Stand der Technik und kommerziell verfügbar können 100 Gbit/s über 50 GHz DWDM Kanäle übertragen werden was einer spektralen Effizient von 2 Bit/s/Hz entspricht.

In den zweiten Ebenen können jede ROADM Domäne separat vollvermascht werden. Dazu sind nach der Gleichung [4] und der Tabelle 6 z.B. für 8 Knoten (ROADMs) 16 Wellenlängen notwendig. Werden auch hier 50 GHz DWDM Kanäle betrachtet, dann können insgesamt 5 vollvermachte Strukturen in dieser ROADM Domäne aufgesetzt werden, aufgrund der verfügbaren 11 x 8 = 88 (siehe Fig. 5) bzw. 10 x 8 = 80 x 50 GHz DWDM Kanälen (siehe z.B. Fig. 7). Durch zusätzliche Wiederverwendungen von Wellenlängen, können weitere zusätzliche Kapazitäten in den ROADM Domänen geschaltet werden. Z.B. kann das Band B#5, das für eine Verbindung von ROADM 10-12.1 nach ROADM 10-12.2 genutzt wird zusätzlich für weitere Verbindungen in derselben Domäne, z.B. von ROADM 10-12.2 nach ROADM 10-12.3 und von ROADM 10-12.3 nach ROADM 10-12.4, usw. mehrfach genutzt werden. Das gilt auch für weitere Verbindungen innerhalb der Domänen wenn noch freie DWDM Kanäle zur Verfügung stehen.

Aufgrund der mehrfachen Vollvermaschungen der Transitebene als auch der einzelnen ROADM Domänen können über die erfindungsseitige hierarchische modulare Netzstruktur große Datenkapazitäten übertragen werden.

Anhand eines Beispiels werden Netzkapazitäten angegeben. Werden z.B. 50 GHz DWDM Verbindungen sowie 12x12 AWG 1 mit 400 GHz Bändern in der ersten Netzebene und 11 ROADMs mit 50 GHz Kanälen in jeder ROADM Domäne der zweiten Netzebene betrachtet, dann ergeben sich folgende Netzkapazitäten:

### Netzkapazität für Verbindungen innerhalb der ROADM Domänen:

Pro bidirektionale Vollvermaschung mit 50 GHz Kanälen in einer ROADM Domäne werden für 11 ROADM 30 optische Wellenlängen benötigt. Für 2 vollvermaschte Ebenen in einer ROADM Domäne werden 2 x 30 = 60 Wellenlängen benötigt. Für eine Vollvermaschung zwischen N = 11 Knoten ergeben sich N x (N - 1) / 2 = 55 bidirektionale Verbindungen. Für 2 vollvermschte Ebenen ergeben sich 2 x 55 = 110 bidirektionale Verbindungen. Kommerziell verfügbare Übertragungssysteme können 100 Gbit/s über 50 GHz DWDM Kanäle übertragen, was einer spektralen Effizienz von 2 Bit/s(Hz) entspricht. Damit ergibt sich innerhalb einer ROADM Domäne eine Übertragungskapazität von 110 x 100 Gbit/s = 11 Tbit/s wofür 60 Wellenlängen von den 96 zur Verfügung stehenden Wellenlängen des C-Bandes (bei 50 GHz Bandbreite) benötigt werden. Als Summe aus allen 12 ROAMD Domänen ergibt sich eine ROADM Domänen Netzkapazität von 12 x 11 Tbit/s = 132 Tbit/s.

### Netzkapazitäten für Transitverbindungen zwischen den ROADM Domänen über die erste AWG 1 Ebene:

Die restlichen 36 Wellenlängen minus der 12 Wellenlängen des Bandes B#1, die nicht verwendet werden können, ergeben 24 freie Wellenlängen die für Transitverbindungen zu anderen ROADM Domänen genutzt werden können. Werden pro ROADM Domäne 2 x 11 = 22 Transitverbindungen über 50 GHz DWDM Kanäle bereitgestellt, dann ergibt sich für heutige Übertragungssysteme mit 100 Gbit/s pro 50 GHz DWDM Kanal eine Transit Kapazität von 22 x 100 Gbit/s = 2,2 Tbit/s. Als Summe aus allen 12 ROAMD Domänen ergibt sich eine bidirektionale Transit Kapazität von 12 x 2,2 = 26,4 Tbit/s.

### Summe der Netzkapazitäten:

Die Summe der Netzkapazitäten ergibt sich aus den Kapazitäten der ROADM Domänen und der Transitkapazität zu 132 Tbit/s + 26,4 Tbit/s = 158,4 Tbit/s. Da noch zusätzliche freie Wellenlängen auf entsprechenden Streckenabschnitten in den ROADM Domänen nicht berücksichtigt wurden, kann sich die Kapazität der gesamten Netzstruktur noch erhöhen.

In optischen Übertragungssystemen erfahren die Übertragungssignale aufgrund von physikalischen Effekten Verzerrungen, z.B. durch chromatische Dispersion, Polarisationsmodendispersion, Signaldämpfung, Filtereinflüsse, usw. In heutigen Übertragungssystemen z.B. 100 Gbit/s über 50 GHz DWDM Kanäle werden diese Einflüsse durch eine Digitale Signal Prozessierung (DSP) im Empfänger kompensiert, wodurch robuste Übertragungen mit Übertragungslängen > 3.000 km möglich sind. Außerdem müssen auf den Glasfaser-Übertragungsstrecken keine kompensierenden Maßnahmen mehr durchgeführt werden.

Dadurch ist ein modularer Aufbau einer hierarchisch verschalteten Netzstruktur möglich (siehe Figuren 12, 13, 14) wobei die Übertragungsstrecken nur Glasfasern und optische Line Amplifier (OLA) enthalten. Dadurch ist ein modularer Netzaufbau möglich wobei kompensierende Maßnahmen auf den Glasfaserteilstrecken entfallen.

Die maximale Anzahl der hintereinander geschalteten ROADM bzw. NxN AWG Elemente ist voraussichtlich begrenzt und ist zu berücksichtigen. Diese maximale Anzahl hängt vom Aufbau und Design der AWGs ab, z.B. vom Amplituden und Frequenzgang der AWG Bänder. Die maximale Anzahl wird auch durch die Digitale Signal Prozessierung in den Empfängern erhöht.

Die Vorteile der vorliegenden Erfindung können beispielhaft wie folgt zusammengefasst werden.

Die vorliegende Erfindung ermöglicht gegenüber herkömmlichen Netzen die kosteneffektive Bereitstellung von hochkapazitiven Services über die erfindungsgemäße passive transparente optisch geroutete hierarchische Netzstruktur.

Modularer hierarchischer Netzaufbau, mit einer transparenten optischen Verbindung auf der Transport Schicht zwischen der ersten AWG 1 Ebene und der zweiten ROADM Domänen Ebene.

Bisher wurden Netzebenen durch Regeneratoren mit Übergängen in den elektrischen Bereich (z.B. auch in Router zum Routen der Signale) getrennt.

Hier werden transparente optische Verbindungen auf der Transport Schicht (OSI Layer 1) zwischen mehreren ROADM Domänen über eine Transit AWG 1 Ebene ermöglicht, wodurch 1 Hop Verbindungen zwischen verschiedenen Domänen und entsprechenden Routern ermöglicht werden.

Bisher wurden die Domänen durch z.B. Router getrennt.

Hier wird die Durchführung der Add/Drop Funktionalität mit nur einem NxN AWG Bauteil ermöglicht. Damit wird auch die Reduzierung der benötigten Komponenten zum Aufbau von DWDM Terminals, WSS, ROADM, etc., und damit geringeres Capex und Opex (Footprint, Energie, etc.) ermöglicht.

Bisher werden für die Durchführung der Add bzw. Drop Funktionalitäten Nxl bzw. 1 x N Multiplexer und Demultiplexer mit erforderlichen Abstimmungen und Regelungen benötigt.

Bisher sind nur Bandbreiten bis 100 GHz / 200 GHz für add/drop Funktionalität typisch.

Bisher sind keine ROADMs mit Bandbreiten > 400 GHz verfügbar.

Hier werden Add/Drop Funktionalität für größere Bandbreiten, z.B. 1600 GHz, für den Aufbau von ROADMs ermöglicht.

Hier werden ROADMs mit wahlfreien DWDM Signale und auch verschiedenen Bandbreiten, z.B. 400 GHz oder 50 GHz oder auch gemischt, aus der Wellenlängenmultiplex herausnehmen (drop) oder dazugeben (add) ermöglicht.

Hier bleiben bei der hierarchischen transparenten Verschaltung die Beziehungen (Logik) für die Wellenlängenzuordnungen für die entsprechenden Hin-und Rückkanäle erhalten. Damit bleiben hier über Domänen Grenzen hinweg auch die Wegeführungen für Hin- und Rückkanäle erhalten.

Die vorliegende Erfindung beinhaltet die Nutzung transparenter optisch geführter DWDM Signale über hierarchische Netzebenen hinweg sowie deren aktive und passive Verschaltungen zu einem Gesamtkonzept für ein einfaches, skalierungsfähiges und kosteneffizientes Transportnetz mit geringen CAPEX und reduziertem OPEX für deren Auf- und Ausbau, um den zukünftigen multi-TBit/s Verkehrsbedarf abdecken zu können.

Durch die transparent optischen Verschaltungen mit entsprechend 1 Hop Verbindungen auch zwischen verschiedenen Domänen kann der Einsatz von Routern reduziert werden wodurch auch der Energiebedarf erheblich reduziert werden kann.

Nach Stand der Technik können Übertragung von 100 Gbit/s über 50 GHz DWDM Kanäle über optische Transportnetze (OTN) mit Übertragungslängen bis zu 3000km verwendet werden. Dabei werden kompensierende Maßnahmen bzgl. weiteren Einflüssen, z.B. Dispersion, Polarisationsmodendispersion, Filter Amplituden- und Frequenzgänge, usw., nicht im Fasernetz sondern nur in den Empfängern durch Digitale Signal Prozessierung (DSP) durchgeführt. Dadurch können transparente optische Verbindungen bereitstellt werden, wobei insbesondere nur optische Verstärker im C-Band, z.B. Stand der Technik: Erbium doped fiber amplifiers (EDFA), eingesetzt werden können. Damit besteht die transparente optische Verbindung nur aus Glasfasern und optischen Verstärkern die eine vereinfachte Planung und Betrieb eines Glasfasernetzes über mehrere Netzebenen ermöglicht.

Mit der vorliegenden Erfindung ist es mögliche eine kostengünstigen Aufbau mit integrierter Technologie bereitzustellen..

## Patentansprüche

1. Optisches Netzwerk mit mehreren DWDM Netzwerk-Terminals, wobei jedes DWDM Netzwerk-Terminal einen rekonfigurierbaren optischen Add/Drop Multiplexer, ROADM, aufweist, wobei der ROADM aufweist:
- ein NxN Arrayed Waveguide Grating, AWG, für N = 12 Bänder, wobei B# die Bandnummer bezeichnet, wobei der AWG N Eingangsports Pi und N Ausgangsports Po aufweist, wobei Pi den Eingangsport und Po den Ausgangsport bezeichnet; und
- einen optischen Switch an mindestens jeweils einem der N Eingangsports Pi und/oder der N Ausgangsports Po, wodurch sich einzelne der N Bänder wahlfrei zuschalten (Add) oder abschalten (Drop) lassen,
wobei die ROADMs der mehreren Terminals in einer unidirektionalen linearen Kettenanordnung, in einer bidirektionalen linearen Kettenanordnung, in einer unidirektionalen Ringanordnung oder in einer bidirektionalen Ringanordnung angeordnet sind, und
**dadurch gekennzeichnet, dass** die optischen Switche frequenzunabhängige Switche sind und
wobei die N Ausgangsports Po mit den Eingangsports Pi für die Bänder B# über folgende Gleichung verknüpft sind: $Po = Mod \left\{\frac{\left(Pi-1\right) + \left(B#-1\right)}{12}\right\} + 1$

2. Netzwerk nach Anspruch 1, wobei 1xM Demultiplexer und Mx1 Multiplexer mit den optischen Switches, vorzugsweise optischen Band Switches, verbunden sind, wodurch Kanäle erzeugt bzw. zusammengeführt werden.

3. Netzwerk nach Anspruch 2, mit zusätzlichen optischen Switches, vorzugsweise optischen Kanal Switches, sodass sich die Kanäle wahlfrei zu- und abschalten lassen.

4. Netzwerk nach Anspruch 1, 2 oder 3, wobei der optische Switch ein 1x2 optischer Switch ist.

5. Netzwerk nach einem der vorhergehenden Ansprüche, mit variablen optischen Abschwächern, VOAs,
i) an den 1xM Demultiplexern und/oder Mx1 Multiplexern, und/oder
ii) an den Eingängen bzw. Eingangsports Pi der AWGs.

6. Netzwerk nach einem der vorhergehenden Ansprüche, mit optischen Verstärkern.

7. Netzwerk nach einem der vorhergehenden Ansprüche, wobei ein Bidirektionaler ROADM mit zwei ROADMs gebildet wird.

8. Netzwerk nach Anspruch 7, wobei
ein Port A der N Eingangsports Pi und ein Port A der N Ausgangsports Po für eine Übertragung von West nach Ost zugeordnet ist und
ein Port B, mit B ≠ A, der N Eingangsports Pi und ein Port B der N Ausgangsports Po für eine Übertragung von Ost nach West zugeordnet ist.

9. Optisches Netzwerk nach einem der vorhergehenden Ansprüche, wobei
i) mehrere unidirektionale Ringanordnungen verschalteter ROADMs an jeweils einem Eingangs-Ausgangs Portpärchens eines übergeordneten NxN AWG transparent optisch über Faserverbindungen angeschaltet werden;
ii) mehrere bidirektionale lineare Kettenanordnungen verschalteter ROADMs an jeweils einem Eingangs-Ausgangs Portpärchen eines übergeordneten NxN AWG transparent optisch über Faserverbindungen angeschaltet werden, oder
iii) mehrere bidirektionale lineare Kettenanordnungen verschalteter ROADMs an jeweils zwei Eingangs-Ausgangs Portpärchen eines übergeordneten NxN AWG transparent optisch über Faserverbindungen angeschaltet werden,
wobei das übergeordnete AWG vorzugsweise als Transitebene, über die angeschaltete ROADM Domänen transparent verkoppelt werden können, dient.

## Claims

1. An optical network comprising a plurality of DWDM network terminals, wherein each DWDM network terminal comprises a reconfigurable optical add/drop multiplexer, ROADM, wherein the ROADM comprises:
- a NxN arrayed waveguide grating, AWG, for N = 12 bands, wherein B# designates the band number, wherein the AWG comprises N input ports Pi and N output ports Po, wherein Pi designates the input port and Po designates the output port; and
- an optical switch at at least a respective one of the N input ports Pi and/or N output ports Po, so that individual ones of the N bands can be randomly added (Add) or dropped (Drop),
wherein the ROADMs of the plurality of terminals are arranged in a unidirectional linear chain arrangement, in a bidirectional linear chain arrangement, in a unidirectional ring arrangement or in a bidirectional ring arrangement, and
**characterized in that** the optical switches are frequency-independent switches and wh
erein the N output ports Po are linked with the input ports Pi for the bands B# in accordance with the following equation: $Po = Mod \left\{\frac{\left(Pi-1\right) + \left(B#-1\right)}{12}\right\} + 1$

2. The network according to claim 1, wherein 1xM demultiplexers and Mx1 multiplexers are connected to the optical switches, preferably optical band switches, so that channels are generated and/or combined.

3. The network according to claim 2, comprising additional optical switches, preferably optical channel switches, so that the channels can be randomly added and dropped.

4. The network according to claim 1, 2 or 3, wherein the optical switch is a 1x2 optical switch.

5. The network according to any one of the preceding claims, comprising variable optical reducers, VOAs,
i) at the 1xM demultiplexers and/or Mx1 multiplexers and/or
ii) at the inputs or input ports Pi of the AWGs.

6. The network according to any one of the preceding claims, comprising optical amplifiers.

7. The network according to any one of the preceding claims, wherein a bidirectional ROADM with two ROADMs is formed.

8. The network according to claim 7, wherein
a port A of the N input ports Pi and a port A of the N output ports Po are assigned for a transmission from west to east and
a port B, with B ≠ A, of the N input ports Pi and a port B of the N output ports Po are assigned for a transmission from east to west.

9. The optical network according to any one of the preceding claims, wherein
i) a plurality of unidirectional ring arrangements of interconnected ROADMs is switched on at a respective input-output port pair of a higher-level NxN AWG in a transparent optical manner via fiber connections,
ii) a plurality of bidirectional linear chain arrangements of interconnected ROADMs is switched on at a respective input-output port pair of a higher-level NxN AWG in a transparent optical manner via fiber connections, or
iii) a plurality of bidirectional linear chain arrangements of interconnected ROADMs is switched on at two respective input-output port pairs of a higher-level NxN AWG in a transparent optical manner via fiber connections,
wherein the higher-level AWG preferably serves as a transit level via which switched-on ROADM domains can be coupled in a transparent manner.

## Revendications

1. Réseau optique avec plusieurs terminaux DWDM, où chaque terminal comporte un multiplexeur add/drop optique reconfigurable ROADM, ledit ROADM présentant :
- un réseau sélectif planaire AWG NxN pour N = 12 bandes, où B# désigne le numéro de bande, ledit AWG présentant N ports d'entrée Pi et N ports de sortie Po, Pi désignant le port d'entrée et Po le port de sortie ; et
- un commutateur optique sur au moins un des N ports d'entrée Pi et/ou des N ports de sortie Po, différentes bandes parmi les N bandes pouvant ainsi être facultativement activées (add) ou désactivées (drop),
où les ROADM des plusieurs terminaux sont agencés en chaîne linéaire unidirectionnelle, en chaîne linéaire bidirectionnelle, en anneau unidirectionnel ou en anneau bidirectionnel, **caractérisé en ce que** les commutateurs optiques sont des commutateurs indépendants de la fréquence, et
**en ce que** les N ports de sortie Po sont reliés aux ports d'entrée Pi pour les bandes B# au moyen de l'égalité suivante : $Po = Mod \left\{\frac{\left(Pi-1\right) + \left(B#-1\right)}{12}\right\} + 1$

2. Réseau selon la revendication 1, où des démultiplexeurs 1xM et des multiplexeurs Mx1 sont reliés aux commutateurs optiques, préférentiellement des commutateurs optiques de bande, des canaux étant ainsi générés ou regroupés.

3. Réseau selon la revendication 2, avec des commutateurs optiques additionnels, préférentiellement des commutateurs optiques de bande, permettant l'activation et la désactivation facultatives de canaux.

4. Réseau selon la revendication 1, la revendication 2 ou la revendication 3, où le commutateur optique est un commutateur optique 1x2.

5. Réseau selon l'une des revendications précédentes, avec des atténuateurs optiques variables VOA,
i) sur les démultiplexeurs 1xM et/ou les multiplexeurs Mx1, et/ou
ii) sur les entrées ou les ports d'entrée Pi des AWG.

6. Réseau selon l'une des revendications précédentes, avec des amplificateurs optiques.

7. Réseau selon l'une des revendications précédentes, où un ROADM bidirectionnel est constitué de deux ROADM.

8. Réseau selon la revendication 7, où
un port A des N ports d'entrée Pi et un port A des N ports de sortie Po est affecté pour une transmission de l'ouest vers l'est, et
un port B, avec B ≠ A, des N ports d'entrée Pi et un port B des N ports de sortie Po est affecté pour une transmission de l'est vers l'ouest ;

9. Réseau optique selon l'une des revendications précédentes, où
i) plusieurs agencements en anneau unidirectionnels de ROADM reliés sont raccordés chacun à une paire de ports d'entrée/sortie d'un AWG NxN prévalent de manière optiquement transparente par des liaisons à fibre ;
ii) plusieurs agencements en chaîne linéaires bidirectionnels de ROADM reliés sont raccordés chacun à une paire de ports d'entrée/sortie d'un AWG NxN prévalent de manière optiquement transparente par des liaisons à fibre, ou
iii) plusieurs agencements en chaîne linéaires bidirectionnels de ROADM reliés sont raccordés chacun à deux paires de ports d'entrée/sortie d'un AWG NxN prévalent de manière optiquement transparente par des liaisons à fibre,
où l'AWG prévalent sert préférentiellement de plan de transit au moyen duquel les domaines ROADM raccordés peuvent être couplés.
